# EUROPEAN PATENT SPECIFICATION

(11) **EP 2 957 365 B1**
(45) Date of publication and mention of the grant of the patent: **12.04.2017**
(21) Application number: 15172819.3
(22) Date of filing: 19.06.2015
(51) Int. Cl.: B22D 21/02, B22D 1/00, B22D 18/00, B22C 9/24, B22C 7/02, B22C 9/04, B22F 3/105, B22D 17/00

(54) **METHOD FOR MANUFACTURING A METALLIC OBJECT BY CASTING**
VERFAHREN ZUR HERSTELLUNG EINES GUSSSTÜCKES
PROCÉDÉ DE FABRICATION D`UNE PIÈCE DE COULÉE

(30) Priority: 20.06.2014 IT PD20140156
(43) Date of publication of application: 23.12.2015
(73) Proprietor: IMR S.R.L., 34076 Romans d'Isonzo (GO) (IT)
(72) Inventor: Giolo, Fabio, 33050 Bagnaria Arsa UD (IT)
(74) Representative: Modiano, Micaela Nadia

(56) References cited:
- EP-B1- 1 377 399
- WO-A2-98/14624
- CN-A- 1 257 762

## Description

The present invention relates to a method for manufacturing a metallic object by casting.

Currently it is known to manufacture objects made of non-ferrous metallic alloy by means of manufacturing processes by casting and melting into suitable died, in which the liquid metal takes the shape of the corresponding cavity and hardens.

These processes require first of all the provision of a three-dimensional drawing, on the basis of which a core box and a core, if the part has cavities, and a shell are provided. The core is usually made of sand and the shell is made of steel or other heat-resistant alloys.

The metal is injected from below at low pressure and, at the end of the hardening, the piece is extracted from the mold supplying a blank that corresponds in its shape to the cavity filled with the molten metal.

The sprue is removed from it and taken to the recycling furnace, while the core and the shell must be discarded. The part is then sent to the subsequent processes and to the subsequent treatments.

This process, though being by now well established, is not devoid of drawbacks, the foremost being that production times are excessively long, particularly during the preliminary steps of manufacturing the core and the shell.

Moreover, the casting process and the hardening of the part are not thermally controlled and in order to improve the mechanical characteristics it is necessary to subject the part to suitable thermal treatments after the hardening step.

Another drawback is due to the fact that the use of sand to provide these parts affects production costs considerably, since by not being reusable it must be disposed of at each casting process.

CN 1 257 762 A discloses a solution-based solidification-stack shaping method comprising creating a shaping environment with uniform temperature, and subsequently the liquid material to be shaped is sprayed out by nozzle along the trace of the physical prototype to be shaped to solidify on the shaped part and be stacked sequentially and gradually to obtain the desired prototype.

EP 1 377 399 B1 discloses an apparatus for casting molten metal for the production of metal castings by "lost-foam" technology. The apparatus comprises: a first container of molten metal; a second container having an upper mouth and containing a bath of granular material, immersed in which is a pattern made of expanded material which can evaporate when contacted by the molten metal; filling means for supplying the molten metal from the first container to the pattern in the second container; and means for applying a partial vacuum to the second container, which comprise a removable cover which can seal the mouth of the second container in a leaktight manner and which has a first opening with which vacuum-generating means are associated and a second opening with which the filling means are associated in a leaktight manner so that when the cover is fitted on the second container in a leaktight manner and the vacuum-generating means are activated, the liquid metal is transferred form the first container to the pattern.

WO 98/14624 A2 discloses an apparatus and process for producing semi-solid material suitable for directly casting into a component wherein the semi-solid material is formed from a molten material and the molten material is introduced into a container. Semi-solid is produced therefrom by agitating, shearing, and thermally controlling the molten material. The semi-solid material is maintained in a substantially isothermal state within the container by appropriate thermal control and thorough three-dimensional mixing. A means for removing the semi-solid material from the container extends from the container, including a temperature control mechanism to control the temperature of the semi-solid material within the removing means.

The aim of the present invention is to devise a method that allows to manufacture metallic objects in reduced times and costs with respect to currently known casting processes.

Within the scope of this aim, an object of the invention is to devise a casting process by which it is possible to recycle the auxiliary materials for the production of the finished part.

This aim and these and other objects that will become better apparent hereinafter are achieved by a method for manufacturing a metallic object by casting, characterized in that it comprises the following steps:
- generating a virtual model of the object to be manufactured,
- three-dimensionally printing a physical model, which corresponds to said virtual model, using metallic material that has a melting point that is lower than that of the metallic material of which said object will be made,
- inserting said physical model within a mold containing material in powder form,
- compacting said material in powder form, creating a negative pressure in said mold,
- injecting molten metallic material, of which said object must be made, within said mold, replacing said physical model by melting its metallic material, and discharging said material outside said mold,
- hardening said object within said mold,
- opening said mold and extracting said object.

Further characteristics and advantages of the invention will become better apparent from the description of a preferred but not exclusive embodiment of the method according to the invention, illustrated by way of non-limiting example in the drawings, wherein:
Figure 1 is a view of the generation step of a method according to the invention;
Figure 2 is a view of the printing step of the method according to the invention;
Figure 3 is a sectional view of the mold used in the method according to the invention, with the physical model inside it;
Figure 4 is a view of the injection step of the method according to the invention;
Figure 5 is a view of a metallic object obtained by means of the method according to the invention.

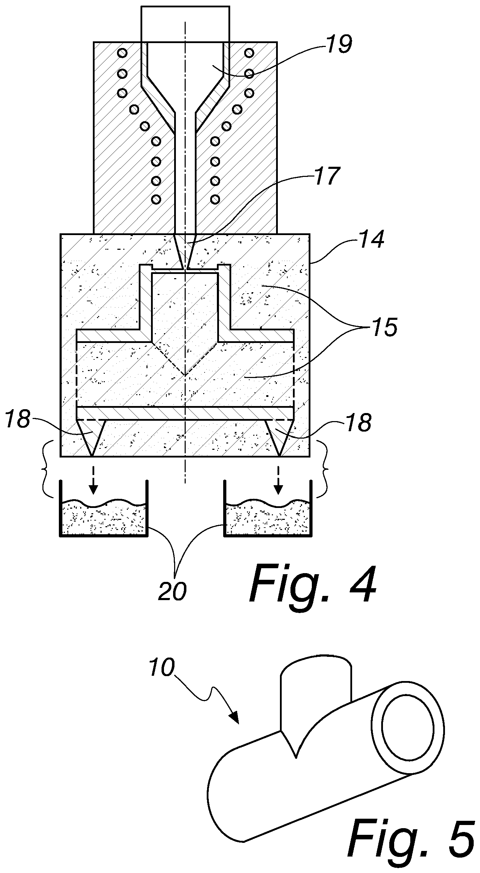

With reference to the figures, the method according to the invention comprises a series of steps described hereinafter, at the end of which it is possible to obtain an object 10 shown in Figure 5.

This method falls within the category of casting processes for manufacturing metallic objects and in particular is suitable for manufacturing objects made of non-ferrous metallic material and provided with cavities. For example, the method lends itself to manufacturing objects 10 made of aluminum or brass or magnesium.

The method entails first of all the generation of a virtual model 11, which consists of a three-dimensional drawing of the object 10 to be manufactured.

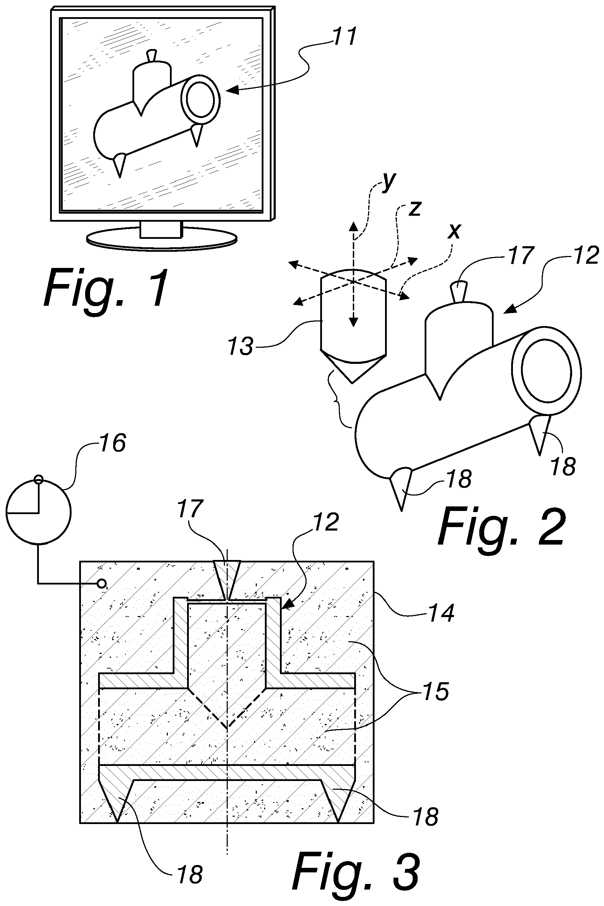

In this example, the virtual model 11 shown in Figure 1, on a computer screen, shows a hollow T-shaped connector.

Subsequently, the virtual model 11 is reproduced in a finished physical model 12. This occurs with a step of three-dimensional printing of the physical model 12 that corresponds to the virtual model 11. The shape of the physical model 12 reproduces accurately the virtual model 11 and like the latter is, in the illustrated example, a tubular hollow T-shaped connector.

This type of printing is performed by means of a 3D printer using a liquid metal alloy jet.

The metallic material with which the physical model 12 is provided has a lower melting point than the metallic material of which the object 10 will be manufactured, being a low-melting alloy preferably based on bismuth and tin, which melts at approximately 120°C.

The 3D printer is provided with a head, shown schematically in Figure 2 and designated by the reference numeral 13, which is conveniently provided with a formation nozzle suitable for dispensing low-melting metallic alloys. The head 13 dispenses the low-melting liquid metal at a temperature comprised between 120°C and 320°C, moving in space along the three directions x, y and z in order to recreate the shape of the model.

A mold 14 is filled with material in powder form 15 and the physical model 12 is inserted in it. The material in powder form 15 is compacted, creating a negative pressure in the mold 14. For this purpose, a pressure gauge 16 is conveniently associated with the mold 14.

The material in powder form 15 is preferably ceramic material.

The mold 14 is shown in cross-section in Figure 3, with the physical model 12 inside. It can be noted that the material in powder form 15 also fills the cavity of the physical model 12.

Figure 3 also shows that the mold 14 conveniently has an injection region 17 and two discharge regions 18.

These regions are reproduced on the virtual model 11 and on the physical model 12 and in addition to these there are also cylindrical channels, visible in the cross-section of Figure 3 and in the subsequent Figure 4, also manufactured with the same molding method of the model, connecting the part to the hole of the injector 19.

In a subsequent step, shown in Figure 4, the non-ferrous molten metallic material, of which the object 10 must be constituted, is injected into the mold 14 with a rheocasting process.

Injection occurs by casting the metallic material from above and at low pressure.

Figure 4 shows the injector 19 arranged above the mold 14 and at the injection region 17. The injector 19 is provided with an electromagnetic stirrer capable of producing a rotating magnetic field with relative flow within the vein of molten metal. As an alternative, the same effect can be obtained by means of a mechanical stirrer. The molten metallic material present in the injector 19 is conveniently temperature-controlled in order to ensure the structural transformation induced by the stirrer.

The molten metallic material has a temperature that can be comprised between approximately 700°C and approximately 1000°C depending on the chosen alloy or in any case much higher than that of the low-melting alloy of which the physical model 12 is constituted.

By means of the injection, due to the high temperature of the non-ferrous metallic material, it replaces the physical model 12 by melting its metallic material, which is therefore discharged by gravity outside the mold 14 through the two discharge regions 18.

Two collectors 20 are conveniently arranged below the mold 14 at the two discharge regions 18. At the end of the injection of the non-ferrous metal alloy, the low-melting alloy of the physical model 12 is in fact recovered for a subsequent similar manufacturing cycle.

In order to know whether the injection step has ended, and therefore whether the physical model 12 has been replaced completely with the molten metallic material, it is possible to use thermocouples that read the temperature variation or casting channels that act as level indicators.

The object 10 hardens within the mold 14 and at the end of this step the mold 14 is opened and the object 10 is extracted from it.

The portions that correspond to the injection region 17 and the discharge regions 81, as well as those that correspond to the cylindrical channels for connection of the injector to the part, have preset notches to facilitate their removal after hardening has ended.

After removal, these parts are taken to the recycling furnace.

The ceramic material in powder form 15 is recovered as well.

The described method allows therefore to recycle completely the auxiliary materials for the manufacture of the part, i.e., the ceramic that fills the mold 14, the low-melting metallic material of the physical model 12 and the metallic material of the portions removed from the manufactured object.

It should be noted that the described steps of the method can be provided in shorter times than those of known methods for manufacturing by casting. In fact, except for the step of generating the virtual model 11, the other steps can be performed in significantly reduced times: the three-dimensional printing of the physical model 12 can require one tenth of the time required for the construction of a core box and a shell.

Moreover, by way of the injection performed with a rheocasting process, it is not necessary for the metal to be heated to such a temperature as to make it liquid; with this process it is not necessary to break the bonds between the molecules and it is in fact sufficient for the temperature to be such as to render it semisolid, thus limiting the application of heat during casting and therefore containing the costs linked to the use of adapted devices for heating and maintaining at high temperature the metal in the molten state. Moreover, a lower melting and casting temperature increases the average lifespan of the parts subject to wear, such as the lining of the casting furnace and the injector.

With this rheocasting process a metallic product is obtained that has a globular structure and therefore has better mechanical characteristics, in particular high structural toughness, also has better structural integrity, with a reduction of the percentages of defects due to internal and structural porosities. In this manner subsequent thermal treatments are not necessary, reducing further the production times and costs of the metallic object.

In practice it has been found that the invention achieves the intended aim and objects, devising a method by way of which it is possible to manufacture non-ferrous metallic objects with drastically reduced times and costs, recycling completely the auxiliary materials used in the manufacture of the product.

The method allows, moreover, to obtain non-ferrous metallic objects that have better mechanical and structural characteristics than those that can be achieved with currently known casting methods, without requiring subsequent thermal treatments.

The invention thus conceived is susceptible of numerous modifications and variations, all of which are within the scope of the appended claims; furthermore, all the details may be replaced with other technically equivalent elements.

In practice, the materials used, so long as they are compatible with the specific use, as well as the contingent shapes and dimensions, may be any according to requirements and to the state of the art.

The disclosures in Italian Patent Application No. PD2014A000156, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for manufacturing a metallic object (10) by casting, **characterized in that** it comprises the following steps:
- generating a virtual model (11) of the object (10) to be manufactured,
- three-dimensionally printing a physical model (12), which corresponds to said virtual model (11), using metallic material that has a melting point that is lower than that of the metallic material of which said object (10) will be made,
- inserting said physical model (12) within a mold (14) containing material in powder form (15),
- compacting said material in powder form (15), creating a negative pressure in said mold (14),
- injecting molten metallic material, of which said object (10) must be made, within said mold (14), replacing said physical model (12) by melting its metallic material, and discharging said material outside said mold (14),
- hardening said object (10) within said mold (14),
- opening said mold (14) and extracting said object (10).

2. The method according to claim 1, **characterized in that** said three-dimensional printing is performed by means of a 3D printer using a liquid metal alloy jet.

3. The method according to claim 1, **characterized in that** said physical model (12) is provided by printing low-melting alloy.

4. The method according to claim 1, **characterized in that** the injection of molten metal occurs at a controlled temperature and by using an injector (19) provided with an electromagnetic stirrer.

## Patentansprüche

1. Ein Verfahren zur Herstellung eines metallischen Gegenstands (10) durch Gießen, **dadurch gekennzeichnet, dass** es folgende Schritte umfasst:
- Herstellen eines virtuellen Modells (11) des herzustellenden Gegenstands (10),
- dreidimensionales Drucken eines physikalischen Modells (12), das dem virtuellen Modell (11) entspricht, unter Verwendung von Metallmaterial, das einen Schmelzpunkt hat, der niedriger ist als derjenige des Metallmaterials, aus dem der Gegenstand (10) hergestellt wird,
- Einsetzen des physikalischen Modells (12) in eine Form (14), die Material in Pulverform (15) enthält,
- Komprimieren des Materials in Pulverform (15) unter Erzeugung eines Unterdrucks in der Form (14),
- Einspritzen von geschmolzenem Metallmaterial, aus dem der Gegenstand (10) hergestellt werden muss, in die Form (14), Austauschen des physikalischen Modells (12) durch Schmelzen seines Metallmaterials und Ablassen des Materials aus der Form (14),
- Härten des Gegenstands (10) in der Form (14),
- Öffnen der Form (14) und Herausnehmen des Gegenstands (10).

2. Das Verfahren gemäß Anspruch 1, **dadurch gekennzeichnet, dass** das dreidimensionale Drucken mit einem 3D-Drucker unter Verwendung eines Flüssigmetalllegierungs-Sprühstoßes vorgenommen wird.

3. Das Verfahren gemäß Anspruch 1, **dadurch gekennzeichnet, dass** das physikalische Modell (12) durch Drucken von niedrigschmelzender Legierung hergestellt wird.

4. Das Verfahren gemäß Anspruch 1, **dadurch gekennzeichnet, dass** das Einspritzen von geschmolzenem Metall bei einer kontrollierten Temperatur und mit Hilfe eines Injektors (19) stattfindet, der mit einem elektromagnetischen Rührer ausgestattet ist.

## Revendications

1. Procédé pour fabriquer un objet métallique (10) par coulée, **caractérisé en ce qu'**il comporte les étapes suivantes :
- générer un modèle virtuel (11) de l'objet (10) à fabriquer,
- imprimer de manière tridimensionnelle un modèle physique (12), qui correspond audit modèle virtuel (11), en utilisant un matériau métallique qui a un point de fusion qui est inférieur à celui du matériau métallique dont ledit objet (10) sera fait,
- insérer ledit modèle physique (12) à l'intérieur d'un moule (14) contenant du matériau sous forme de poudre (15),
- compacter ledit matériau sous forme de poudre (15), créer une pression négative dans ledit moule (14),
- injecter du matériau métallique fondu, dont ledit objet (10) doit être fait, à l'intérieur dudit moule (14), remplacer ledit le modèle physique (12) en faisant fondre son matériau métallique, et décharger ledit matériau à l'extérieur dudit moule (14),
- durcir ledit objet (10) à l'intérieur dudit moule (14),
- ouvrir ledit moule (14) et extraire ledit objet (10).

2. Procédé selon la revendication 1, **caractérisé en ce que** ladite impression tridimensionnelle est réalisée au moyen d'une imprimante 3D utilisant un jet d'alliage de métal liquide.

3. Procédé selon la revendication 1, **caractérisé en ce que** ledit modèle physique (12) est fourni en imprimant un alliage à bas point de fusion.

4. Procédé selon la revendication 1, **caractérisé en ce que** l'injection de métal fondu a lieu à une température contrôlée et en utilisant un injecteur (19) pourvu d'un agitateur électromagnétique,
